# EUROPÄISCHE PATENTANMELDUNG

(11) **EP 2 374 607 A2**
(43) Veröffentlichungstag der Anmeldung: **12.10.2011**
(21) Anmeldenummer: 11152228.0
(22) Anmeldetag: 26.01.2011
(51) Int. Cl.: B29C 70/50, B29B 11/16

(54) **Verfahren und Vorrichtung zur Herstellung von Vorformlingen aus faserverstärktem Kunststoff**

(30) Priorität: 12.04.2010 DE 102010014704
(71) Anmelder: Brötje-Automation GmbH, 26215 Wiefelstede (DE)
(72) Erfinder: Reinhold, Raphael, 26409, Wittmund (DE); Jürgens, Stefan, 26129, Oldenburg (DE)
(74) Vertreter: Belda, Stefan Johannes

(57) **Zusammenfassung**

Vorrichtung (1) und Verfahren zur Herstellung von Vorformlingen (30) aus faserverstärktem Kunststoff, wobei in einem ersten Schritt kontinuierlich zugeführte Faserlagen (16) vorbestimmt quer umgeformt werden und das entstandene Profil (35,36,37) in einem zweiten Schritt durch Langsumformung gezielt gekrümmt wird.

## Beschreibung

Die vorliegende Erfindung betrifft eine Vorrichtung und ein Verfahren zur Herstellung von Vorformlingen aus faserverstärktem Kunststoff.

Die Wahl des Werkstoffes für verschiedenste Anwendungen fällt heutzutage immer öfter auf glasfaserverstärkte (GFK) bzw. kohlenstoffverstärkte (CFK) Kunststoffe. Dies beruht auf einer immer größer werden Nachfrage nach Leichtbaulösungen. Auf dem Gebiet des Maschinenbaus und insbesondere in der Luft- und Raumfahrttechnik, sowie in der Windkraftanlagenbranche sind hochstabile und gleichzeitig sehr leichte Lösungen aus GFK oder CFK nicht mehr wegzudenken.

Natürlich haben sich die vorteilhaften Eigenschaften dieser Werkstoffe auch im Automobil- und im Flugzeugbau durchgesetzt. Insbesondere für Produktionen in sehr großer Stückzahl im Automobilbau wird ein immer größerer Einsatz von GFK- und CFK-Komponenten vorhergesagt.

Im Flugzeugbau, der mit der Fortbewegung großer Massen zurechtkommen muss, kann die Leistungsfähigkeit eines Produktes durch den Einsatz von Leitbaulösungen stark erhöht werden. Zum Beispiel können durch das eingesparte Gewicht auch die laufenden Kosten, wie z.B. Kraftstoffkosten, minimiert werden.

Der Vorteil von faserverstärkten Kunststoffen ist ihre hohe spezifische Festigkeit und Steifigkeit bei einer sehr geringen Dichte. Dies ist ein deutlicher Vorteil gegenüber metallischen Werkstoffen. Durch die sehr geringe Dichte der eingesetzten Fasern und die meist noch geringere Dichte der eingesetzten Kunststoffe erreicht man eine auf das Gewicht bezogene deutliche Überlegenheit dieser Leichtbaustoffe gegenüber klassisch eingesetzten metallischen Werkstoffen.

Die gesamte Fertigung von Bauteilen aus faserverstärkten Kunststoffen ist immer noch sehr manuell orientiert. Dadurch entstehen sehr hohe Produktionskosten, wodurch eine Produktion von hohen Stückzahlen oder gar eine Massenproduktion derzeit nicht erschwinglich ist.

Lediglich für Bauteile mit sehr einfachen Geometrien sind teil- oder vollautomatisierte Prozesse bekannt geworden. Zum Beispiel wird für die Herstellung von geraden Profilen mit einem konstanten Querschnitt das sogenannte Pultrusionsverfahren verwendet. Dies ist unter anderem geeignet für die Herstellung von Kunststoffgeländern, Kunststoffleitern, Zeltstangen oder Bettgestellen.

Besonders die in der Flugzeug- und Automobilindustrie benötigten gebogenen Strukturbauteile sind derzeit nur in Handarbeit aufwendig und langwierig fertigbar. Eben solche gebogenen Teile aus faserverstärkten Kunststoffen, die aus aerodynamischen Gründen oder wegen der besseren Steifigkeit oft gefordert werden, werden immer mehr an Bedeutung im Bereich des Automobil- oder Flugzeugbaus gewinnen.

Um Bauteile mit höherer geometrischer Komplexität, sogenannte integrale Bauteile, zu fertigen, werden die gewünschten Strukturen aus Faserhalbzeugen wie Rovings, Geweben, Gelegen, Vliesen, Geflechten u.ä. zunächst in die gewünschte Form drapiert. Dies geschieht beispielsweise mittels eines bestimmten Zuschnitts der Werkstoffe, die dann um oder in konvex, konkav oder anders räumlich gestaltete Vorrichtungen drapiert werden. Anschließend werden die meist aus mehreren Halbzeugen bestehenden Gebilde vernäht und mit einem Kunststoff getränkt, der zu der sogenannten Matrix aushärtet.

Nachteilig bei dieser Herstellungsmethode sind insbesondere auch die durch das Nähen entstehenden kleinen Löcher, die unter anderem auch die Stabilität negativ beeinflussen können, da die Nähte auch Fasern zerstören können.

Aus der EP 1 504 880 A sind ein automatisierter Prozess und eine dafür vorgesehene Maschine bekannt geworden, wodurch Bauteile mit einfacheren geometrischen Formen, wie L-, S-, H-oder Hutformen, in einem teilautomatisierten Prozess aus Prepregs gefertigt werden können. Leichte Krümmungen können erzeugt werden, indem die benutzten Prepregs in einer speziellen Pressform während des Fertigungsprozesses des Bauteils so gerafft werden, dass das Bauteil einen entsprechenden Radius aufweist.

Nachteilig bei einer solchen Methode ist, dass nur sehr leichte Krümmungen gefertigt werden können und dass nur Prepregs und nicht andere Ausgangsmaterialien verwendet werden können. Einerseits sind Prepregs teuer, andererseits müssen die Prepregs von speziellen Folien abgedeckt gelagert werden, damit sie nicht zusammenkleben. Diese Folien müssen natürlich vor dem Zusammenführen verschiedener Lagen wieder entfernt werden. Hierdurch wird auch eine kontinuierliche Fertigung von Bauteilen erschwert. Außerdem weisen Prepregs nur eine begrenzte Lagerfähigkeit vor der Verarbeitung auf und müssen gekühlt aufbewahrt werden.

Weiterhin müssen die aufgebauten Prepregstapel oben und unten von anderen speziellen Folien abgedeckt werden, damit sie in der geheizten Presse nicht anhaften. Für eine gewünschte Krümmung müssen diese Folien in eben dieser Krümmung vorgefertigt werden, was auch einen erheblichen Aufwand bedeutet.

Sind aber zum Beispiel Strukturbauteile mit einer höheren Komplexität erfordert, so müssen diese derzeit in Einzelbauteilen mit einfacher Geometrie hergestellt werden, die anschließend in aufwendigen Montageprozessen zu der gewünschten Baugruppe zusammengesetzt werden können. Neben sehr hohen Kosten resultiert aus dieser Fertigungsmethode ein höheres Gewicht sowie sehr lange Produktionszeiten.

Es ist deshalb die Aufgabe der vorliegenden Erfindung ein Verfahren und eine Vorrichtung zur Verfügung zu stellen, womit eine kostengünstigere Fertigung von Vorformlingen und Bauteilen aus faserverstärkten Kunststoffen ermöglicht wird.

Diese Aufgabe wird gelöst durch ein Verfahren zur Herstellung von Vorformlingen aus faserverstärktem Kunststoff mit den Merkmalen des Anspruchs 1, sowie durch eine Vorrichtung zum Ausführen eines solchen Verfahrens mit den Merkmalen des Anspruchs 14. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Verfahren zur Herstellung von Vorformlingen aus faserverstärktem Kunststoff formt zunächst kontinuierlich zugeführte Faserlagen durch Querumformung in einen vorbestimmten Querschnitt um. Ein so entstandenes Profil wird dann in einem weiteren Schritt durch Längsumformung gezielt gekrümmt.

Das erfindungsgemäße Verfahren bietet viele Vorteile. Ein erheblicher Vorteil ist, dass ein Strukturbauteil von hoher geometrischer Komplexität kontinuierlich und automatisiert gefertigt werden kann. Die Querumformung in einen Zielquerschnitt wird über das Umformen mittels CNC-gefertigter Formkerne erreicht. Dabei werden die Faserlagen über Anpressrollen um die Formkerne geformt, sodass sie nach und nach die gewünschte Profilform annehmen. Ein weiterer Vorteil ist, dass mit dem erfindungsgemäßen Verfahren auch gekrümmte Bauteile gefertigt werden können. Besonders vorteilhaft ist auch, dass für dieses Verfahren auch Trockenfasermaterial benutzt werden kann, das nicht zusammenklebt und gut gelagert werden kann.

Dabei geht es hauptsächlich um die Herstellung komplexer Strukturbauteile. Daher werden die Vorformlinge vorzugsweise aus wenigstens zwei Profilen zusammengesetzt.

Um ein wirklich kontinuierliches und auch schnelles Verfahren zur Verfügung zu stellen, werden besonders bevorzugt wenigstens zwei Profile für einen Vorformling parallel bzw. gleichzeitig gefertigt, die später zu einem Bauteil zusammengesetzt werden.

In bevorzugten Ausgestaltungen sind die Faserlagen auf Rollen oder Spulen gelagert und werden dem Fertigungsprozess aus einer Bevorratungseinheit zugeführt. Dadurch kann eine kontinuierliche Produktion gewährleistet werden.

Es ist besonders bevorzugt, dass nötige Spulenwechsel automatisch erfolgen. Denkbar und möglich ist jedoch auch, dass die Faserlagen in einer speziellen dem Prozess vorgeschalteten Fertigungseinrichtung oder Konzeptioniereinheit kontinuierlich vorproduziert werden.

Als Faserlagen werden bevorzugt Trockenfasermaterial, Rovings, Gewebe, Gelege, Vliese, Geflechte oder auch benutzt. Diese werden dann später von einer Matrix aus thermoplastischen Kunststoff umgeben. Der verwendete Kunststoff muss nicht immer auf die Faserlagen aufgetragen werden. Die Faserlagen können beispielsweise auch aus mit Kunststoff ummantelten Fasern gefertigt sein. Dabei können einzelne Fasern oder ein gewisser Anteil der Fasern oder alle Fasern jeweils separat ummantelt sein. Daraus kann dann ein Gewebe oder dergleichen hergestellt werden. Denkbar ist aber auch die Verwendung von duroplastischen Kunststoffen für die Matrix. Prepregs sind schon mit einem Bindersystem vorimprägniert.

Um jegliche Spannung in dem Bauteil zu vermeiden, werden die Faserlagen in bevorzugten Ausgestaltungen zugentlastet in den Prozess eingebracht. Diese Zugentlastung kann steuerbar sein und führt die Faserlagen über zum Beispiel ein Tänzerrollensystem oder nivellierte Rollen orientiert und kontrolliert dem Fertigungsprozess zu.

Besonders bevorzugt können die Faserlagen wenigstens eines Profils vor der Querumformung nur punktuell fixiert werden. Dies ist insbesondere für Profile mit unidirektionalen Faserlagen wichtig, die im Längsumformungsprozess nicht gestreckt werden können. Daher erfolgt eine punktuelle Fixierung insbesondere nicht im Bereich des späteren Außenradius, da die Faserlagen in diesem Bereich für die Längsumformung gegeneinander beweglich bleiben müssen.

Die thermoplastischen Kunststoffe werden bevorzugt durch eine Heizeinrichtung aktiviert. Vorteilhaft sind hierbei Infrarotstrahler.

Diese sind besonders bevorzugt insbesondere verschwenk-und/oder drehbar. Dadurch kann bei einem Produktionsverzug eine Überhitzung des Materials vermieden werden. Dies ist auch durch die Abschirmung der Strahler möglich.

Da verschiedene Anwendungen unterschiedliche Bauteile mit verschieden Radien erfordern, ist der dem Profil in der Längsumformung beigebrachte Radius in bevorzugten Ausgestaltungen variabel. Eine Änderung des Radius während der Produktion eines Profils ist auch denkbar und sinnvoll.

In bevorzugten Ausgestaltungen werden die produzierten Profile direkt in die gewünschte Länge gekürzt. Dazu kann die Produktion kurz unterbrochen werden, es ist aber insbesondere auch denkbar, dass eine Trenneinheit verfahrbar und mit dem Produktionsprozess synchronisiert vorgesehen ist. Dadurch können die Profile auch ohne Produktionsunterbrechung in die gewünschte Größe zerteilt werden.

Die so zurechtgeschnittenen Profile werden anschließend besonders bevorzugt von einer Handlingeinheit, die auch einen Roboter umfassen kann, zu einer Montage- und Kompaktierungseinheit überführt. Dabei kann der Roboter beispielsweise einen Greifarm mit einer Vakuumvorrichtung aufweisen, mittels welcher die fertigen Profile transportiert werden. Dabei können zum Beispiel Bauteile mit einem Radius zwischen 1500 und 2500 mm von dem Roboter gegriffen werden.

Die erfindungsgemäße Vorrichtung zur kontinuierlichen Herstellung von Vorformlingen aus faserverstärktem Kunststoff umfasst verschiedene Bereiche. Dabei ist wenigstens eine Bevorratungseinheit vorgesehen, in welcher Faserlagen auf Rollen oder Spulen lagerbar sind. Wenigstens eine Heizeinheit ist vorgesehen, durch die beispielsweise mittels Infrarotstrahler die Faserlagen beheizbar sind. Auch wenigstens eine Querumformungseinheit und wenigstens eine Längsumformungseinheit sind vorgesehen. Die zu verarbeitenden Faserlagen sind kontinuierlich aus der Bevorratungseinheit zuführbar. In der Querumformungsformungseinheit sind die Faserlagen in ein Profil mit einem vorbestimmten Querschnitt umformbar. Dies Profil kann dann in der Längsumformungseinheit in einen vorbestimmten Radius gekrümmt werden.

Um ein Bindersystem auf die Faserlagen aufbringbar zu machen, falls keine vorbehandelten Faserlagen wie Prepregs benutzt werden, ist in bevorzugten Ausgestaltungen ein Binderauftragsmodul vorgesehen. Mit diesem ist das Bindersystem lokal auf die Faserlagen aufbringbar, es können aber auch die kompletten Faserlagen mit dem Bindersystem ausrüstbar sein. Das Bindersystem kann dabei beispielsweise pulverförmig vorliegen und durch ein Lochblech und einen Rotationsschieber auf die Faserlagen auftragbar sein. Auch flüssige Binderssysteme, die zum Beispiel mit einem Sprühkopf als Aerosol auftragbar sind, sind sinnvoll.

Besonders bevorzugt umfasst die Vorrichtung wenigstens der folgenden Module: Induktoreinheit, Binderauftragsmodul, Trenneinheit, Handlingeinheit, und/oder Montagevorrichtung.

Weitere Vorteile und Merkmale der vorliegenden Erfindung ergeben sich aus den Ausführungsbeispielen, die im Folgenden mit Bezug auf die beiliegenden Figuren beschrieben werden.

Darin zeigen:
- Fig. 1: eine schematische Darstellung der erfindungsgemäßen Vorrichtung in einer perspektivischen Seitenansicht;
- Fig. 2: eine Prinzipdarstellung nach Fig. 1 in einer perspektivischen Seitenansicht;
- Fig. 3: eine weitere Prinzipdarstellung der erfindungsgemäßen Vorrichtung in Seitenansicht;
- Fig. 4a: eine schematische Darstellung der Querformungseinheit;
- Fig. 4b: eine Prinzipzeichnung nach Fig. 4a;
- Fig. 5a: eine schematische Darstellung der Längsumformungseinheit in einer Seitenansicht;
- Fig. 5b: eine schematische Darstellung der Längsumformungseinheit in einer Draufsicht;
- Fig. 5c: Prinzipzeichnung der Längsumformungseinheit nach Fig. 5b;
- Fig. 6: eine schematische Darstellung eines Binderauftragmoduls in einer perspektivischen Seitenansicht;
- Fig. 7: ein nach dem erfindungsgemäßen Verfahren hergestelltes LCF-Profil
- Fig. 8: einen schematisch dargestellten Querschnitt durch ein LCF-Profil wie in Fig. 7; und
- Fig. 9a-g: eine schematische Darstellung der Funktionsweise der Montage-/Kompaktierungseinheit in Querschnitten.

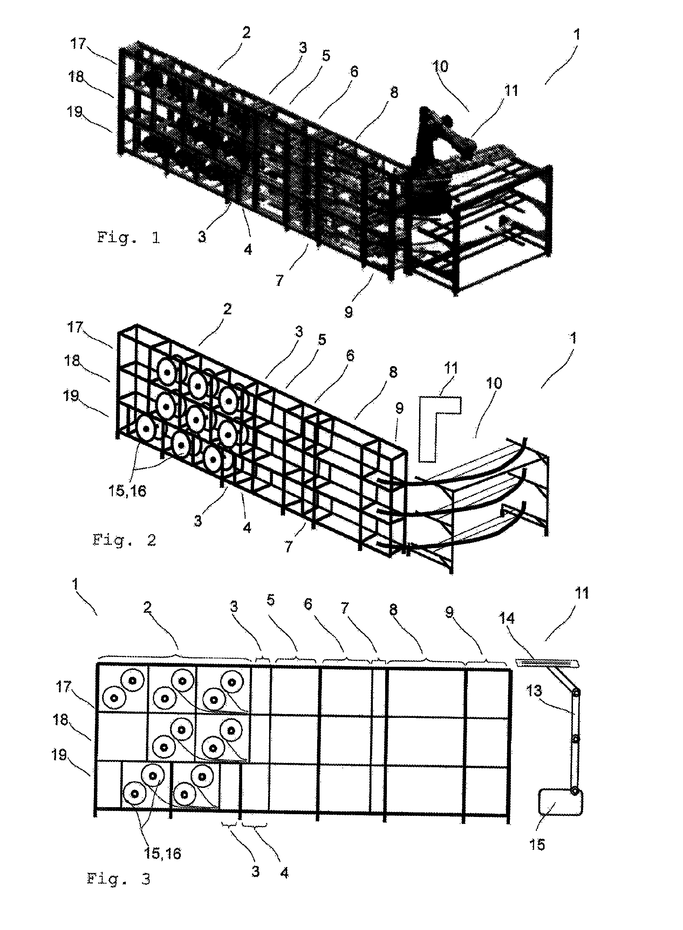

In Figur 1 ist ein Ausführungsbeispiel einer erfindungsgemäßen Vorrichtung 1 darstellt. Die Anlage besteht aus Rahmen, die aus Standard-Profilelementen gefertigt sind. Dabei wird bei der Auswahl der verwendeten Komponenten besonders auf eine leichte Austauschbarkeit, eine Temperaturbeständigkeit bis wenigstens ca. 200°C, Acetonbeständigkeit und eine hohe Materialschonung während des Produktionsprozesses geachtet. Weiterhin kann die gesamte Anlage schmiermittelfrei sein, wodurch keine Einschränkungen in der Materialwahl entstehen.

Das Gerüst ist modular ausgelegt, wobei sich innerhalb der einzelnen Rahmen die Installationen für die entsprechenden Funktionsträger befinden. Dadurch kann die Anlage optimal auf verschiedene Anforderungen bezüglich des produzierten Vorformlings, aber auch bezüglich des Aufstellungsortes angepasst werden.

Die in Figur 1 dargestellte Anlage hat beispielsweise eine Länge von 8 m, eine Breite von 2,5 m und eine Höhe von 2 m. Die einzelnen Module haben dabei hier eine Einheitshöhe von 625 mm und eine Einheitsbreite von 500 mm. Die Länge der einzelnen Module variiert je nach verbauter Einheit, wobei die Module hier in einer Rasterung von 125 mm vorgesehen sind.

Die erfindungsgemäße Anlage dient dazu, Vorformlinge bzw. Strukturelemente mit komplexen Geometrien in einem kontinuierlichen Verfahren zu fertigen. Dies wird dadurch erreicht, dass wenigstens zwei Profile in der Anlage gefertigt werden und anschließend zu dem komplexen Strukturelement zusammengesetzt werden. Um einen schnellen und kontinuierlichen Prozess sicher zu stellen, können daher wenigstens zwei Profile, die natürlich auch unterschiedliche Querschnitte aufweisen können, parallel/gleichzeitig in der Anlage gefertigt werden. Dies ist in den Figuren 1-3 durch die drei dargestellten Produktionsebenen 17, 18, 19 exemplarisch gezeigt.

Die in den Figuren 1 gezeigte Anlage hat eine Bevorratungseinheit 2 mit insgesamt 10 Modulen. Jedes Modul kann in diesem Beispiel zwei Spulen 15 mit Faserlagen 16 beherbergen. Dabei gibt es entsprechende Spulen für die +/-45° und die 0° Lagen der Profile. Der Spulenwechsel ist so ausgelegt, dass er möglichst schnell und bedienerfreundlich erfolgen kann. Die +/- 45° Lagen eignen sich insbesondere gut zur Drapierung, da ein längs liegender Streifen kurvenförmig verformt werden kann, ohne dass Fasern im Innen- oder Außenradius gedehnt oder gestaucht werden.

In jeder Produktionsebene 17, 18, 19 können jeweils mehrere Faserlagen von unterschiedlichen Spulen in den Produktionsprozess eingebracht werden.

Um einen verzugsfreien und kontrollierten Materialtransport zu gewährleisten, sind UD-Anteile in den Faserlagen vorteilhaft. Weiterhin sind die Spulen vorteilhafterweise gebremst ausgelegt, um ein zu schnelles Einbringen der Faserlagen zu verhindern. Die Spulen besitzen dazu einen hohlen Kern, welcher zwischen zwei verschieblichen, drehbar gelagerten Konusstücken geklemmt wird. Das Abbremsen erfolgt zum Beispiel über ein gefedertes Reibelement an einem der Konusstücke. Natürlich sind auch andere Abbremssysteme wie zum Beispiel Magnetpulver- oder Hysteresebremsen denkbar.

Jedes Modul der Bevorratungseinheit hat wenigstens einen drehbaren Abheber zur sicheren Abwicklung der Faserlagen von der Spule. Am Ende von jedem Modul der Bevorratungseinrichtung 2 befinden sich Rollen zur Nivellierung der Materialverläufe. Zur notwendigen Geradführung des Materials beim Abspulen werden Steckringe als Bordscheiben verwendet.

Eine andere sinnvolle Methode des kontrollierten Abrollens der einzelnen Faserlagen von den Spulen ist ein in den Figuren 1-3 nicht dargestelltes Modul, die Zugentlastungseinheit. Hier befinden sich fest nivellierte Rollen am Eingang und am Ausgang des Moduls. Die Funktion der Zugentlastung übernehmen dazwischen an gemeinsamen Vertikalführungen verschiebbar angeordnete Rollen, die je nach Zuglast als Ausgleichselemente fungieren. Dadurch wird ein Geschwindigkeitsunterschied zwischen den einzelnen Faserlagen vermieden. Dieses Modul kann auch zusätzlich zu den gebremsten Rollen verwendet werden.

Das nächste Modul in den Figuren 1-3 ist die Förderungseinheit 3. Diese dient dazu, die einzelnen Faserlagen in ihre richtige Orientierung zu bringen. Dazu sind auf drehbaren Rollen Stellringe vorgesehen, die die einzelnen Faserlagen richtungsmäßig führen und auch die gewünschte Materialbreite vorgeben können. Zum Ende dieses Moduls werden die verwendeten Faserlagen zu einem Stapel zusammengeführt.

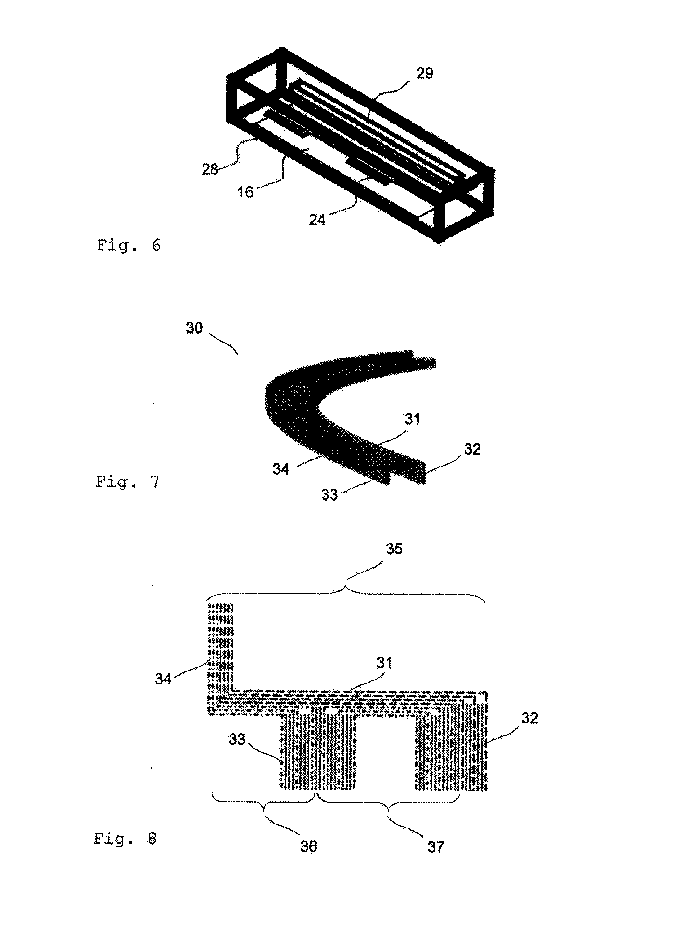

In den Figuren 1-3 ist in der untersten Ebene 19 der Anlage ein zusätzliches Modul verbaut. Die Induktoreinheit 4 ist für eine spezielle Profilbeschaffenheit notwendig. Die erfindungsgemäße Vorrichtung und das erfindungsgemäße Verfahren werden anhand einer Anlage zur Fertigung eines speziellen LCF-Profils beschrieben. Dieses LCF-Profil (Vorformling) 30 ist den Figuren 7 und 8 näher beschrieben. Ein Profil für diesen Vorformling weist eine "C"-Form auf und besitzt in den beiden umgeformten Flanschseiten unidirektionale Faserlagen. Diese können in einer späteren Längsumformung, wenn dem Bauteil also eine Krümmung beigebracht wird, nicht gestreckt werden. Daher dürfen die Faserlagen für das "C"-Profil nicht vollständig fixiert werden.

Hierfür ist die Induktoreinheit 4 nötig, da mit dieser die Faserlagen Iokal angebunden werden können. Dadurch bleibt eine Verschiebbarkeit der einzelnen Lagen gegeneinander im Bereich des späteren Außenradius bestehen. Die benötigten Induktoren werden über einen pneumatischen Greifmechanismus positioniert.

Das Modul, das die Heizeinheit 5 beinhaltet, dient dazu, die noch lose aufeinander verlaufenden Faserlagen so miteinander zu fixieren, das während der folgenden Querumformung keine Richtungsabweichungen mehr stattfinden können. In dem hier vorgestellten Ausführungsbeispiel besitzt jedes der Profile, die später zu dem Vorformling zusammengesetzt werden, wenigstens auf einer Seite im späteren Flanschbereich unidirektionale Faserlagen. Diese können in der Heizeinheit 5 von beiden Seiten beheizt werden, da sie in der Heizeinheit 5 noch eben vorliegen. Verschiedene Wärmequellen sind denkbar und möglich. In der hier beschriebenen Ausführungsform werden allerdings insbesondere Infrarotstrahler verwendet, die in dem hier gezeigten Verfahren nur die unidirektionalen Lagen der Faserlagenstapel beheizen. Die Infrarotstrahler sind verschwenkbar, bevorzugt um ca. 90°. Sie können aber auch in jedem anderen Winkeln weggeschwenkt werden oder auch weggekippt, seitlich herausgefahren oder aber durch zum Beispiel Metallplatten verdeckt werden. Dadurch kann eine Überhitzung der Faserlagen bei einem eventuellen Anlagenstillstand vermieden werden.

Die erhitzten Faserlagenstapel werden anschießend durch Andruckrollen an den gewünschten Stellen zu einem sicheren Verbund zusammengepresst. Der sonst noch lose Lagenaufbau wird durch speziell geformte Führungen in der gewünschten Form gehalten, wodurch auch ein seitliches Abrutschen einzelner Lagen vermieden wird.

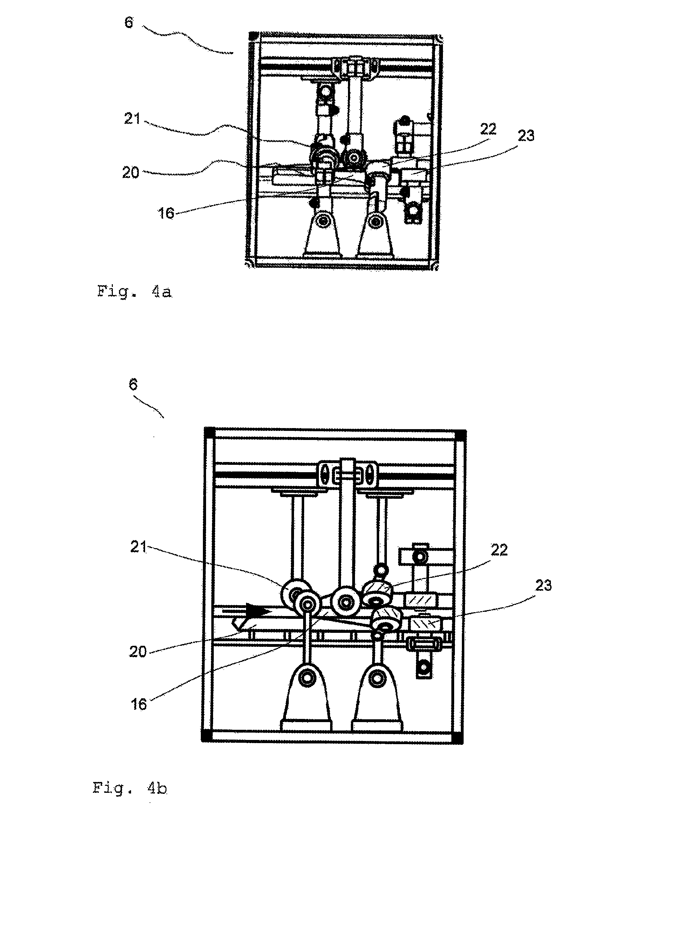

Das nachfolgende Modul, die Querumlenkungseinheit 6, bringt den Faserlagenstapel in den richtigen Querschnitt. Die detaillierte Funktionsweise dieses Moduls wird mittels der Figuren 4a und 4b beschrieben.

Das nächste Modul ist eine Fördereinheit 7 (vgl. Figur 3). Diese ist zuständig für den Materialtransport innerhalb der Fertigung. In der beschriebenen Ausführungsform fördert ein Paar gerädelte Edelstahlwalzen im Bereich des Stegs des Bauteils den Strang durch die Anlage. Dabei ist eine Walze von einem frequenzabhängigen Servo-Getriebemotor angetrieben und die andere als Gegenrolle gefedert oder aber auch pneumatisch gesteuert. Die Gegenrolle ist auch in der Vertikalachse verstellbar, sodass man den Prozess des Weiterförderns so justieren kann, dass ein optimaler Geradeauslauf und eine spannungsfreie übergabe des Profils zur nachfolgenden Längsumformungseinheit 8 gewährleistet sind. Über die Regelung des Motors der ersten Walze ist auch die Prozessgeschwindigkeit steuerbar.

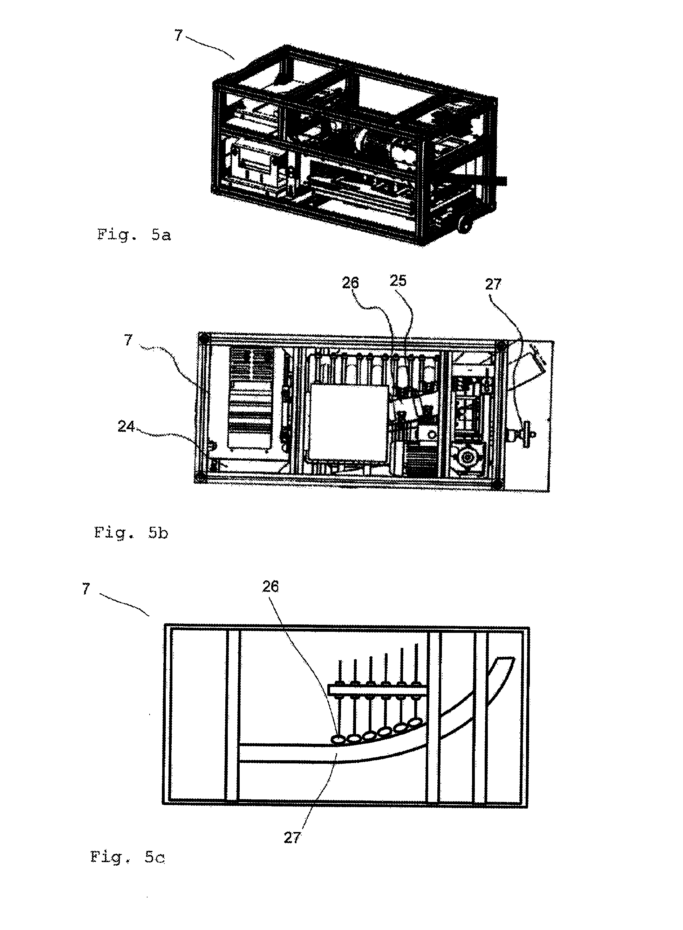

Die Längsumformungseinheit 8 wird in den Figuren 5a-c detailliert beschrieben.

Sobald die Profile in der Längsumformungseinheit 8 in eine vorbestimmte Krümmung gebracht wurden, werden diese in dem folgenden Modul, der Trenneinheit 9, in die gewünschte Länge eingekürzt. Dabei ist in dem hier gezeigten Ausführungsbeispiel der pneumatischer Vorschubzylinder mechanisch mit dem Trennscheibenantrieb gekoppelt. Auch die Trennscheibe ist pneumatisch gesteuert.

Die Trenneinheit kann sich auf einem Verschiebetisch befinden, um an die vorbestimmten Stellen zum Durchtrennen der Profile gefahren zu werden.

Es ist möglich, den kontinuierlichen Prozess für den Schneidprozess kurz anzuhalten. Denkbar und besonders bevorzugt ist allerdings, das die Trenneinheit mit dem Profilvorschub synchronisiert ist, sodass der Fertigungsprozess nicht unterbrochen werden muss. In diesem Fall fährt die Trenneinheit auf dem Verschiebetisch synchron zum Profilvorschub, wodurch das Profil auch in der Vorwärtsbewegung durchtrennt werden kann.

Das letzte Modul der Maschine ist eine Handlingeinheit 10. Diese umfasst einen Positionierer (z.B. einen Roboter) 11 und ein Handhabungsgerät (Montage-/Kompaktierungseinheit). Der Roboter 11 überführt die einzelnen Profile in die Montageeinheit 38, in der die Profile zu dem fertigen Vorformling zusammengesetzt werden.

Zum Überführen nutzt der Roboter 11 einen Robotergreifer 14, der an einem Arm 13, der bewegliche Gelenke haben kann, befestigt ist. Der Roboter kann auch auf einem Sockel 15 stehen. Der Robotergreifer 14 hat einzelne Greifelemente, die in Längsrichtung einen festen Abstand haben und in Querrichtung einstellbar sind. Dadurch lassen sich mittels der Haltekraft eines Vakuums Profile mit einem bestimmten Krümmungsradius greifen. In dem hier gezeigten Ausführungsbeispiel kann der Krümmungsradius zwischen 1500 mm und 2500 mm betragen.

Die Figuren 4a und 4b zeigen ein Ausführungsbeispiel der Umformungseinrichtung 6.

In der schematischen Darstellung in Figur 4a sieht man verschiedene angetriebene und nicht-angetriebene Andruckrollen. Einige Rollen 21 drücken senkrecht auf die Faserlagen 16. Andere Rollen 22 drücken die Faserlagen 16 um einen CNC-gefertigten Formkern 20. Auch Rollen 23 im Winkel von 90° zu den ursprünglichen Faserlagen sind vorgesehen. Die Walzen 21, 22, 23 können entweder konvex, konkav oder gerade geformt. Insbesondere können auch alle Rollen in bestimme Anpresswinkel verstellbar. Alle formgebende und auch alle fördernde Elemente sind in der Anlage aus Edelstahl-Material gefertigt.

Abbildung 4b zeigt eine ähnliche Umformungseinrichtung 6 in einer Prinzipdarstellung.

Die Figuren 5a-c zeigen erfindungsgemäße Ausführungsformen der Längsumformungseinheit 7. Figur 5a zeigt ein Modul mit einer Längsumformungseinrichtung 7 in einer perspektivischen Ansicht von der Seite.

Diese Längsumformungseinheit 7 ist in Figur 5b von oben dargestellt. Auch der Längsumformungseinheit 7 können Heizstrahler 24 zugeordnet sein. Auch diese können wieder verfahr-, verschwenk-, oder kippbar ausgeführt sein, um eine Überhitzung zu vermeiden. Auch hier kann die Wärme durch Abschirmen von dem Material ferngehalten werden. Auch eine Abkühlung erfolgt in diesem Modul. Diese kann eventuell durch das Einbringen von kalter Luft beschleunigt werden.

In der hier beschriebenen Ausführungsform fördert eine Zahnriemeneinheit das Profil durch die Längsumformungseinheit 7. Dabei läuft das Profil über Umformungs- und Führungsbleche 25, die in dieser Ausgestaltung über von einer Spindel 27 verstellbare Stempel 26 in einen bestimmten Radius gebracht werden können. Mittels der Spindel 27 kann ein vorgegebener Radius auch während der Produktion verändert werden, sodass ein unterschiedlicher Radius über ein Profil angebracht werden kann.

Dabei greifen flexibel Förderriemen an beiden Seiten am Flansch des Profils an, die sich in diesem Ausführungsbeispiel an Krümmungsradien des Profils im Bereich von 1500 mm bis 2500 mm anpassen können. Es sind natürlich auch andere Radien denkbar und möglich. Durch die Parallelführung entsteht zusätzlich ein großer Arbeitsbereich zur Beschickung bei der Inbetriebnahme der Anlage.

In Figur 6 ist ein erfindungsgemäßes Binderauftragsmodul 28 in einer perspektivischen Seitenansicht gezeigt. In diesem Modul können die Faserlagen 16 vollständig oder auch nur lokal mit einem Bindersystem ausgerüstet werden. Dazu wird mittels eines Rotationsschiebers 29, an dessen Unterseite ein Lochblech befestigt ist, ein pulverförmiger Binder auf die durchlaufenden Faserlagen 16 aufgebracht.

In dem Rotationsschieber 29 ist eine Welle mit längsseits angebrachten Leitschaufeln gelagert, die durch Drehung der Welle eine Rotationsbewegung der Schaufeln gestattet und eine gleichmäßige Menge des Binders auf das Lochblech fördert. Durch eine auf die Vorschubgeschwindigkeit der Faserlagen 16 abgestimmte Drehzahl des Rotationsschiebers 29 fällt eine definierte Menge des Pulverbinders durch das Lochblech auf die Faserlagen 16.

Um den Binder mit den Faserlagen zu verbinden, sind dem Binderauftragsmodul 28 Heizstrahler, insbesondere wieder Infrarotstrahler 24, zugeordnet.

Die Figuren 7 und 8 zeigen einen Vorformling 30, der mit einer erfindungsgemäßen Ausführungsform hergestellt werden kann. Dabei zeigt Figur 7 eine schematische Darstellung mit den Seitenflächen 32, 33, 34 und der horizontalen Fläche 31.

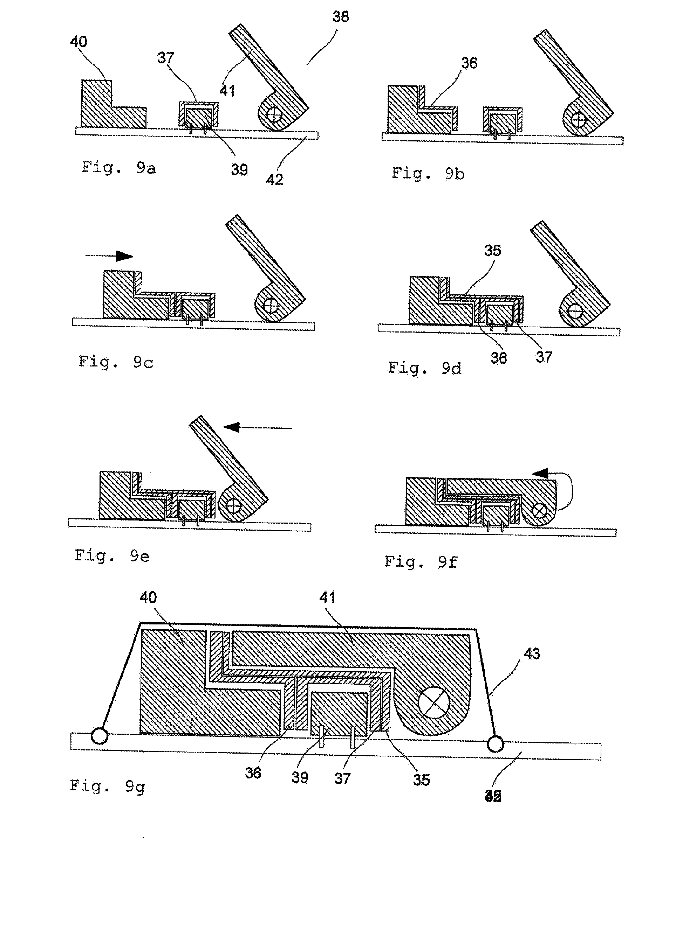

Der spezielle Lagenaufbau dieses Strukturprofils ist in Figur 8 in einem Schnitt gezeigt. Dabei werden drei gefertigte Profile 35, 36, 37 in einer Montageeinrichtung 38 (siehe Figur 9) zusammengesetzt. Dabei sind zwei Profile 35 und 36 S-förmig und ein Profil 37 C-förmig. Das große S-Profil 35 liegt über dem kleinen S-Profil 36 und dem C-Profil 37 und bildet die horizontale Fläche 21. Die Seitenfläche 34 besteht aus dem großen und dem kleinen S-Profil 35, 36 die Seitenfläche 33 aus dem kleinen S-Profil 36 und dem C-Profil 37 und die Seitenfläche 32 aus dem großen S-Profil 35 und dem C-Profil 37.

Durch die Verbindung der drei Einzelprofile 35, 36, 37 entsteht ein hochkomplexes und sehr formstabiles Strukturbauteil.

Figuren 9a bis 9g zeigen die Montage eines erfindungsgemäßen Vorformlings 30 (LCF-Profils) aus den drei Profilen 35, 36, 37.

Hierzu gibt es eine Montageeinheit 38 mit einer Bodenplatte 42 und 3 starren Metallformen 39, 40, 41. Die Metallform 39 ist fest mit der Bodenplatte 42 verbunden. Die drei Profile werden jetzt nacheinander von dem Roboter 11 in die Montageeinheit 38 eingelegt. Zuerst wird das C-Profil 37 auf die Metallform 39 gesetzt (Figur 9a). Anschließend wird das kleine S-Profil 36 auf die Metallform 40 gesetzt. Diese Metallform 40 kann auf der Bodenplatte verschoben werden und wird direkt an das C-Profil auf Metallblock 40 herangeschoben (Figur 9b, c). Anschließend wird über die beiden Profile das große S-Profil 35 gelegt (Figur 9d). Die Metallform 41, die als verschiebbarer Hebel ausgelegt ist, wird jetzt an die Profile 35, 36, 37, herangefahren und fixier die Profile 35, 36, 37 durch Herunterklappen (Figur 9e, f).

Alle Metallblöcke 39, 40, 41 sind mit Heizpatronen ausgestattet und aktivieren den Binder in den Faserlagen, wodurch die Profile zu einem Vorformling zusammengefügt. Eine Vakuummembran 43 sorgt hierbei für den nötigen Prozessdruck (Figur 9g).

Durch die Kompaktierung in der Montageeinheit 38 wird die Belegzeit der eigentlichen RTM-Aushärtevorrichtung minimiert.

### Bezugszeichenliste:

- 1: Vorrichtung
- 2: Bevorratungseinheit
- 3: Führungseinheit
- 4: Induktoreinheit
- 5: Heizeinheit
- 6: Querumformungseinheit
- 7: Fördereinheit
- 8: Längsumformungseinheit
- 9: Trenneinheit
- 10: Handlingeinheit
- 11: Roboter
- 12: Sockel
- 13: Arm
- 14: Greifer
- 15: Rolle/Spule
- 16: Faserlage
- 17: Produktionsebene
- 18: Produktionsebene
- 19: Produktionsebene
- 20: Umformungsform
- 21: Rolle
- 22: Rolle 45°
- 23: Rolle 90°
- 24: Infrarotstrahler
- 25: Blech
- 26: Stempel
- 27: Verstellspindel
- 28: Binderauftragsmodul
- 29: Rotationsschieber
- 30: Vorformling
- 31: horizontal

- 32: Seitenfläche
- 33: Seitenfläche
- 34: Seitenfläche
- 35: großes S-Profil
- 36: Kleines S-Profil
- 37: C-Profil
- 38: Montageeinheit
- 39: Metallform
- 40: Metallform
- 41: Metallform
- 42: Bodenplatte
- 43: Vakuummembran

## Patentansprüche

1. Verfahren zur Herstellung von Vorformlingen aus faserverstärktem Kunststoff, wobei in einem ersten Schritt kontinuierlich zugeführte Faserlagen durch Querumformung in einen vorbestimmten Querschnitt umgeformt werden, **dadurch gekennzeichnet,**
**dass** das entstandene Profil in einem zweiten Schritt durch Längsumformung gezielt gekrümmt wird.

2. Verfahren zur Herstellung von Vorformlingen aus faserverstärktem Kunststoff nach Anspruch 1, **dadurch gekennzeichnet, dass** dieser aus wenigstens zwei Profilen zusammengesetzt wird.

3. Verfahren zur Herstellung von Vorformlingen aus faserverstärktem Kunststoff nach einem der vorhergehenden Ansprüche, **dadurch gekennzeichnet, dass** wenigstens zwei Profile parallel gefertigt werden.

4. Verfahren zur Herstellung von Vorformlingen aus faserverstärktem Kunststoff nach einem der vorhergehenden Ansprüche, **dadurch gekennzeichnet, dass** die Faserlagen auf Rollen oder Spulen gelagert sind und aus einer Bevorratungseinrichtung dem Fertigungsprozess zugeführt wird.

5. Verfahren zur Herstellung von Vorformlingen aus faserverstärktem Kunststoff nach einem der vorhergehenden Ansprüche, **dadurch gekennzeichnet, dass** ein Spulenwechsel automatisch erfolgt, und/oder dass die Faserlagen in einer vorgeschalteten Fertigungsvorrichtung kontinuierlich vorproduziert werden.

6. Verfahren zur Herstellung von Vorformlingen aus faserverstärktem Kunststoff nach einem der vorhergehenden Ansprüche, **dadurch gekennzeichnet, dass** als Faserlagen Trockenfasermaterial, Rovings, Gewebe, Gelege, Vliese, Geflechte oder Prepregs benutzt werden und als Matrix thermoplastischer Kunststoff benutzt wird, der die Fasern auch ummanteln kann.

7. Verfahren zur Herstellung von Vorformlingen aus faserverstärktem Kunststoff nach einem der vorhergehenden Ansprüche, **dadurch gekennzeichnet, dass** die Faserlagen zugentlastet in den Prozess eingebracht werden.

8. Verfahren zur Herstellung von Vorformlingen aus faserverstärktem Kunststoff nach einem der vorhergehenden Ansprüche, **dadurch gekennzeichnet, dass** die Faserlagen wenigstens eines Profils vor der Querumformung nur punktuell, insbesondere nicht im Bereich des späteren Außenradius, fixiert werden.

9. Verfahren zur Herstellung von Vorformlingen aus faserverstärktem Kunststoff nach einem der vorhergehenden Ansprüche, **dadurch gekennzeichnet, dass** eine Heizeinrichtung, insbesondere wenigstens ein Infrarotstrahler, vorgesehen ist, um den thermoplastischen Kunststoff zu aktivieren.

10. Verfahren zur Herstellung von Vorformlingen aus faserverstärktem Kunststoff nach einem der vorhergehenden Ansprüche, **dadurch gekennzeichnet, dass** die Heizquellen insbesondere verschwenk- und/oder drehbar und/oder abschirmbar sind.

11. Verfahren zur Herstellung von Vorformlingen aus faserverstärktem Kunststoff nach einem der vorhergehenden Ansprüche, **dadurch gekennzeichnet, dass** der Radius der Längsumformung variabel ist.

12. Verfahren zur Herstellung von Vorformlingen aus faserverstärktem Kunststoff nach einem der vorhergehenden Ansprüche, **dadurch gekennzeichnet, dass** die fertigen Profile von einer Trenneinheit in bestimmte Größen geteilt werden.

13. Verfahren zur Herstellung von Vorformlingen aus faserverstärktem Kunststoff nach einem der vorhergehenden Ansprüche, **dadurch gekennzeichnet, dass** die hergestellten Profile von einer Handling-Einheit, insbesondere einem Roboter, zu einer Montage-/Kompaktierungseinheit überführt werden.

14. Vorrichtung zur kontinuierlichen Herstellung von Vorformlingen aus faserverstärktem Kunststoff, umfassend wenigstens eine Bevorratungseinheit, wenigstens eine Heizeinheit, wenigstens eine Querumformungseinheit, **dadurch gekennzeichnet,**
**dass** die zu verarbeitenden Faserlagen kontinuierlich aus der Bevorratungseinheit zuführbar sind und in der Querumformungsformungseinheit in einen vorbestimmten Querschnitt umformbar sind und dass wenigstens eine Längsumformungseinheit vorgesehen ist, in der die quer umgeformten Faserlagen in einen Radius krümmbar sind.

15. Vorrichtung zur kontinuierlichen Herstellung von Vorformlingen aus faserverstärktem Kunststoff, **dadurch gekennzeichnet, dass** ein Binderauftragsmodul vorgesehen ist, mittels dessen die durch die Anlage laufenden Faserlagen lokal oder vollständig mit einem Bindersystem ausrüstbar sind.

16. Vorrichtung zur kontinuierlichen Herstellung von Vorformlingen aus faserverstärktem Kunststoff, **dadurch gekennzeichnet, dass** wenigstens eine der folgenden Einheiten vorgesehen ist: Induktoreinheit, Binderauftragsmodul, Trenneinheit, Handlingeinheit, Kompaktierung-/Montagevorrichtung.
